# FASCICULE DE BREVET EUROPEEN

(11) **EP 2 386 793 B1**
(45) Date de publication et mention de la délivrance du brevet: **13.01.2021**
(21) Numéro de dépôt: 11165272.3
(22) Date de dépôt: 09.05.2011
(51) Int. Cl.: B60Q 1/26, B60Q 1/00, F21S 43/14

(54) **Dispositif optique, notamment pour véhicule automobile**
Optische Vorrichtung, insbesondere für Kraftfahrzeug
Optical device, in particular for an automobile

(30) Priorité: 12.05.2010 FR 1053728
(43) Date de publication de la demande: 16.11.2011
(73) Titulaire: Valeo Vision, 93012 Bobigny Cedex (FR)
(72) Inventeur: Hermitte, Michel, 49400, Angers (FR); Certain, Stephan, 75020, Paris (FR)

(56) Documents cités:
- EP-A1- 1 705 422
- EP-A1- 1 895 228
- EP-A2- 1 357 332
- EP-A2- 1 857 731
- DE-A1-102007 049 309
- US-A1- 2009 296 416
- US-B1- 7 237 936

## Description

L'invention concerne un dispositif optique, notamment pour véhicule automobile, tel qu'un dispositif d'éclairage et/ou de signalisation.

On connaît par la demande de brevet DE 10 2007 014215 un projecteur comportant un élément de lentille primaire associé à une LED (diode électroluminescente). Dans ce projecteur, la source de lumière n'est pas cachée en aspect éteint, à travers la lentille. Le document EP 1 357 332 A2 divulgue un projecteur avec des modules qui sont disposés le long d'une ligne courbe.

La présente invention vise à proposer un nouveau dispositif optique, notamment pour réaliser une fonction de signalisation.

L'invention a notamment pour objet de permettre, avec une source LED, de créer un faisceau de signalisation en combinant une technologie à réflecteur et une lentille d'aspect lisse.

L'invention concerne un dispositif optique selon la revendication 1.

L'invention permet notamment un aspect original, à savoir la source lumineuse est dissimulée, non visible, à travers la lentille, lorsque le dispositif est vu de face.

Cette lentille présente un aspect de bille de verre lorsque la fonction du module lumineux est éteinte.

Si l'on veut, la lentille présente un aspect lisse à la fois en état allumé et éteint de la source associée.

Le dispositif selon l'invention comporte une pluralité de modules lumineux, par exemple certains au moins sont identiques (par exemple en étant de constitution identique) voire tous identiques, agencés pour former ensemble un faisceau réglementaire, notamment un faisceau de signalisation réglementaire tel qu'un feu diurne (DRL), un feu Stop, un indicateur de direction, une lanterne...

Le nombre desdits modules lumineux peut être supérieur à quatre, étant par exemple compris entre six et dix, étant par exemple égal à huit. Selon l'invention, lesdits modules sont disposés le long d'une ligne courbe, notamment cette ligne suit sensiblement un bord galbé du dispositif, cette ligne pouvant par exemple présenter un coude.

Dans un exemple de mise en oeuvre de l'invention, les modules lumineux sont séparés les uns des autres par une distance choisie pour permettre à ces modules de présenter, lorsque les sources lumineuses associées sont allumées, un aspect lumineux discrétisé, à savoir comme un ensemble de points lumineux sensiblement disjoints.

Le cas échéant, le dispositif comporte un masque, notamment réalisé en matière plastique par exemple par moulage, comprenant une ou plusieurs cavités pour loger au moins partiellement une ou plusieurs sources lumineuses supplémentaires notamment pour réaliser une ou plusieurs fonctions photométriques d'éclairage, cette source ou ces sources pouvant comporter au moins une lampe telle qu'une lampe halogène ou à décharge par exemple une lampe xénon, et l'un au moins des modules lumineux, notamment de la fonction de signalisation, est disposé sur un support de préférence distinct du masque.

Avantageusement, des sources lumineuses des modules sont disposées sur un support commun, ce support étant de préférence plan. Ce support est de préférence différent d'une feuille flexible.

Si on le souhaite, tous les modules lumineux, notamment à LED, du dispositif et notamment formant la fonction de signalisation, sont disposés sur un support commun unique.

Dans un autre exemple de mise en oeuvre de l'invention, les modules lumineux, notamment à LED, du dispositif (et notamment formant la même fonction de signalisation) sont disposés sur au moins deux supports séparés.

Avantageusement ce ou ces supports comportent au moins une carte de circuit imprimé.

Par exemple, les réflecteurs des modules lumineux sont réalisés sur une pièce commune.

Dans un exemple de mise en oeuvre de l'invention, le réflecteur du module lumineux présente, suivant une première coupe notamment horizontale, un pourtour sensiblement parabolique ou en variante elliptique (dans ce deuxième cas, avec de préférence un second foyer en avant du foyer de la lentille), notamment de manière à concentrer et à optimiser le faisceau de lumière intermédiaire provenant du réflecteur.

Si on le souhaite, le réflecteur du module présente, suivant une deuxième coupe (perpendiculaire à la première coupe) notamment verticale, un pourtour sensiblement elliptique, notamment avec un foyer de l'ellipse sensiblement confondu avec un foyer de la lentille, de manière à envoyer vers la lentille le maximum de flux lumineux.

De préférence, la source lumineuse du module est disposée sensiblement à une extrémité du réflecteur, notamment à un emplacement inférieur du réflecteur.

Le cas échéant, il est prévu, entre la source et la lentille, un seul réflecteur, à savoir le réflecteur défini ci-dessus, sur le trajet de la lumière émise par cette source.

Dans un exemple de mise en oeuvre de l'invention, le réflecteur présente une hauteur supérieure à celle de la lentille, notamment le réflecteur comporte une extrémité qui est située sensiblement en dessous de la lentille, lorsque le réflecteur et la lentille sont montés dans le dispositif.

Par exemple, le réflecteur est formé par une pièce revêtue au moins partiellement d'un revêtement métallique réfléchissant.

Dans un exemple de mise en oeuvre de l'invention, la lentille est agencée pour répartir le faisceau pour réaliser la fonction photométrique requise.

Avantageusement la lentille présente un aspect lisse, notamment la lentille est dépourvu d'arête vive, la lentille présentant de préférence un aspect de bille de verre lorsque la source lumineuse associée est éteinte.

L'invention permet notamment un aspect innovant, par exemple en permettant d'avoir un aspect de bille de diamètre apparent faible, par exemple inférieur à 12 mm.

Par exemple les lentilles des modules lumineux sont portées par un support commun ou, en variante, par des supports distincts.

Dans un exemple de mise en oeuvre de l'invention, la source lumineuse du module présente un axe d'émission principal de la lumière orienté vers le réflecteur, par exemple cet axe peut être l'axe vertical.

L'invention pourra être mieux comprise à la lecture de la description détaillée qui va suivre, d'un exemple de mise en œuvre non limitatif de l'invention, et à l'examen du dessin annexé, sur lequel :
- la figure 1 illustre, schématiquement et partiellement, en vue de dessus, un module lumineux d'un dispositif optique selon un exemple de mise en œuvre de l'invention,
- la figure 2 représente, schématiquement et partiellement, en vue de côté, le module de la figure 1,
- la figure 3 illustre schématiquement une image formée par le dispositif selon l'exemple de l'invention, et
- les figures 4 à 6 illustrent, très schématiquement, différentes vues du dispositif selon l'exemple de l'invention.

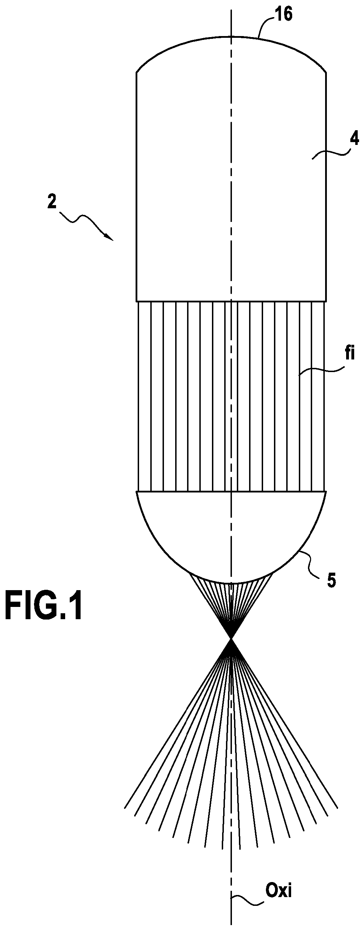

On a représenté, notamment sur les figures 1, 2 et 6, différents éléments d'un dispositif optique 1 pour véhicule automobile, ce dispositif 1 formant un projecteur et comportant une pluralité de modules lumineux 2, chaque module 2 comportant :
- une source lumineuse 3 comprenant une LED,
- un réflecteur 4 agencé pour réfléchir de la lumière provenant de la source lumineuse 3,
- une lentille 5 disposée sur le trajet d'un faisceau lumineux fi provenant du réflecteur 4, cette lentille présentant un axe optique Oxi.

La source lumineuse 3 est disposée à distance de l'axe optique Oxi de la lentille 5 associée de manière à ce que la source lumineuse 3 ne soit pas visible à travers la lentille 5 par une personne regardant le véhicule sur lequel le dispositif 1 est monté.

La lentille 5 présente un aspect de bille de verre lorsque la fonction du module lumineux est éteinte.

La lentille 5 présente par exemple une face sensiblement en calotte sphérique.

Dans l'exemple décrit, le dispositif 1 comporte huit modules lumineux 2, de préférence identiques, agencés pour former ensemble un faisceau réglementaire, notamment un faisceau de signalisation réglementaire tel qu'un feu diurne (DRL), un feu Stop, un indicateur de direction, une lanterne.

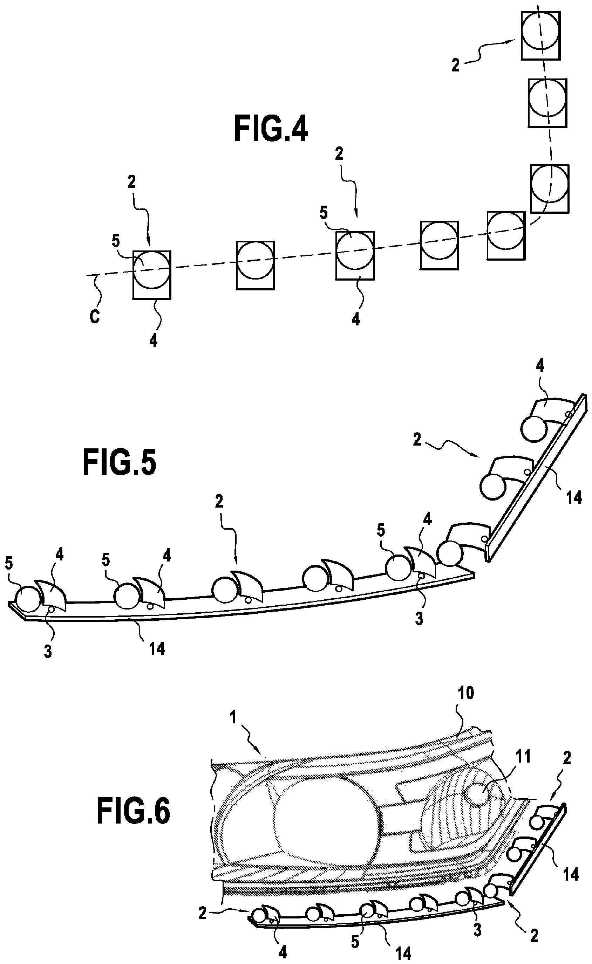

Comme illustré sur la figure 4, les modules 2 qui forment une même fonction de signalisation, sont disposés le long d'une ligne courbe C, notamment cette ligne C suit sensiblement un bord galbé du projecteur, cette ligne pouvant par exemple présenter un coude.

Les modules lumineux 2 sont séparés les uns des autres par une distance choisie pour permettre à ces modules de présenter, lorsque les sources lumineuses 3 associées sont allumées, un aspect lumineux discrétisé, à savoir comme un ensemble de points lumineux sensiblement disjoints.

Comme illustré sur la figure 6, le dispositif comporte un masque 10 réalisé en matière plastique, comprenant une ou plusieurs cavités 11 pour loger au moins partiellement une ou plusieurs sources lumineuses supplémentaires (non représentées) notamment pour réaliser une ou plusieurs fonctions photométriques d'éclairage, cette source ou ces sources supplémentaires pouvant comporter au moins une lampe telle qu'une lampe halogène ou à décharge par exemple une lampe xénon, et l'un au moins des modules lumineux 2 de la fonction de signalisation est disposé sur un support 14 distinct du masque 10.

Dans l'exemple décrit, les modules lumineux 2, notamment à LED, du dispositif (formant ensemble la fonction de signalisation) sont disposés sur deux supports séparés 14 (voir figures 5 et 6).

Le boîtier 10 et les supports 14 sont disposés dans une enceinte de projecteur fermée à l'avant par une glace (non représentée).

Ces supports 14 comportent au moins une carte de circuit imprimé pour recevoir les LED 3.

Par exemple, les réflecteurs 4 des modules lumineux sont réalisés sur une pièce commune.

Chaque réflecteur 4 du module lumineux 2 présente, suivant une première coupe notamment horizontale, un pourtour 16 sensiblement parabolique, notamment de manière à concentrer et à optimiser le faisceau intermédiaire provenant du réflecteur.

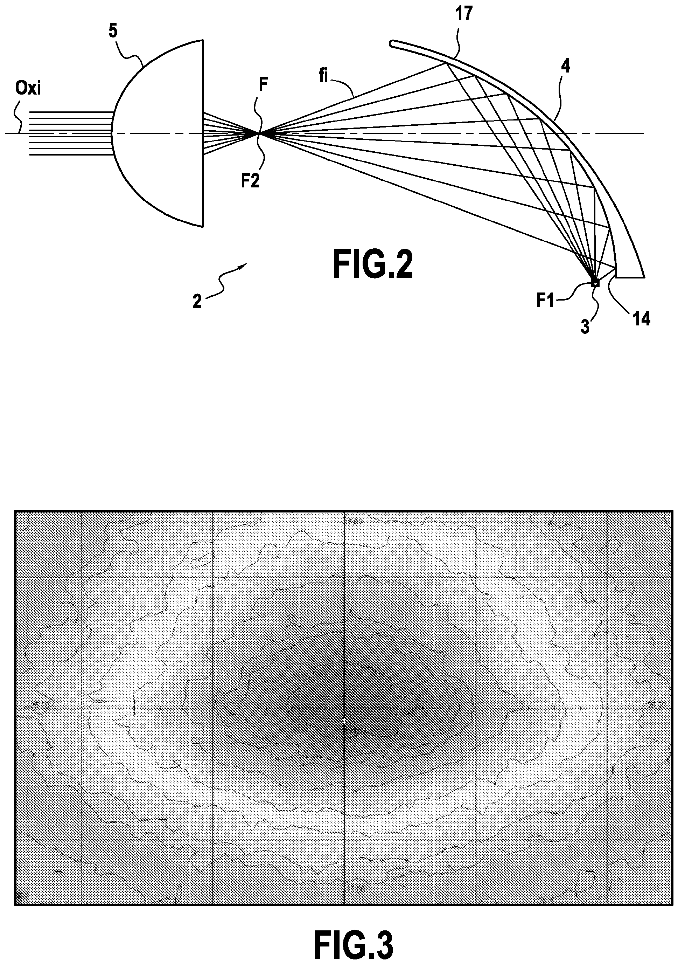

Chaque réflecteur 4 du module 2 présente, suivant une deuxième coupe notamment verticale, un pourtour 17 sensiblement elliptique, notamment avec un foyer F2 de l'ellipse sensiblement confondu avec un foyer F de la lentille, de manière à envoyer vers la lentille le maximum de flux lumineux (voir figure 2).

La LED 3 associée au module 2 est disposée sensiblement à une extrémité du réflecteur, notamment à un emplacement inférieur du réflecteur (voir figure 2), sensiblement au premier foyer F1 du réflecteur 4.

Le réflecteur 4 peut présenter une hauteur supérieure à celle de la lentille 5, notamment le réflecteur comporte une extrémité 19 qui est située sensiblement en dessous de la lentille, lorsque le réflecteur 4 et la lentille 5 sont montés dans le dispositif.

Le réflecteur 4 peut être formé par une pièce revêtue au moins partiellement d'un revêtement métallique réfléchissant.

Les lentilles 5 des modules lumineux sont portées par les supports 14 respectifs.

La figure 3 illustre la répartition lumineuse d'un faisceau DRL obtenu dans l'exemple décrit.

## Revendications

1. Dispositif optique (1), notamment pour véhicule automobile, ce dispositif comportant une pluralité de modules lumineux (2), au moins un desdits modules comportant :
- une source lumineuse (3), notamment comprenant une LED,
- un réflecteur (4) agencé pour réfléchir de la lumière provenant de la source lumineuse,
- une lentille (5) disposée sur le trajet d'un faisceau lumineux provenant du réflecteur, cette lentille présentant un axe optique,
- la source lumineuse est disposée à distance de l'axe optique (Oxi) de la lentille, de manière à ce que la source lumineuse ne soit pas visible à travers la lentille,
dispositif (1) dans lequel:
- lesdits modules lumineux (2) de la pluralité de modules lumineux (2), de préférence certains au moins sont identiques, sont agencés pour former ensemble un faisceau réglementaire, notamment un faisceau de signalisation réglementaire, et
- lesdits modules sont disposés le long d'une ligne courbe (C), notamment cette ligne suit sensiblement un bord galbé du dispositif, cette ligne pouvant par exemple présenter un coude.

2. Dispositif selon la revendication précédente, **caractérisé par le fait qu'**il comporte un masque (10), notamment réalisé en matière plastique par exemple par moulage, comprenant une ou plusieurs cavités pour loger au moins partiellement une ou plusieurs sources lumineuses supplémentaires notamment pour réaliser une ou plusieurs fonctions photométriques d'éclairage, cette source ou ces sources pouvant comporter au moins une lampe telle qu'une lampe halogène ou à décharge par exemple une lampe xénon, et **par le fait que** l'un au moins des modules lumineux est disposé sur un support (14) distinct du masque.

3. Dispositif selon l'une quelconque des revendications précédentes, **caractérisé par le fait que** certaines sources lumineuses des modules sont disposées sur un support commun (14), ce support étant de préférence plan.

4. Dispositif selon la revendication précédente, **caractérisé par le fait que** tous les modules lumineux, notamment à LED, du dispositif sont disposés sur un support commun unique.

5. Dispositif selon l'une des revendications 1 à 3, **caractérisé par le fait que** les modules lumineux, notamment à LED, du dispositif sont disposés sur au moins deux supports (14) séparés.

6. Dispositif selon l'une quelconque des revendications précédentes, **caractérisé par le fait que** le réflecteur (4) du module lumineux présente, suivant une première coupe notamment horizontale, un pourtour sensiblement parabolique, notamment de manière à réaliser un faisceau avec une grille photométrique prédéterminée.

7. Dispositif selon l'une des revendications 1 à 5, **caractérisé par le fait que** le réflecteur (4) du module lumineux présente, suivant une première coupe notamment horizontale, un pourtour sensiblement elliptique, notamment de manière à réaliser un faisceau avec une grille photométrique prédéterminée

8. Dispositif selon l'une quelconque des revendications précédentes, **caractérisé par le fait que** le réflecteur (4) du module présente, suivant une deuxième coupe notamment verticale, un pourtour sensiblement elliptique, notamment avec un foyer de l'ellipse sensiblement confondu avec un foyer de la lentille, de manière à envoyer vers la lentille le maximum de flux lumineux.

9. Dispositif selon l'une quelconque des revendications précédentes, **caractérisé par le fait que** la source lumineuse (3) du module est disposée sensiblement à une extrémité du réflecteur.

10. Dispositif selon l'une quelconque des revendications précédentes, **caractérisé par le fait que** le réflecteur (4) présente une hauteur supérieure à celle de la lentille, notamment le réflecteur comporte une extrémité qui est située en dessous de la lentille, lorsque le réflecteur et la lentille sont montés dans le dispositif.

11. Dispositif selon l'une quelconque des revendications précédentes, **caractérisé par le fait que** la lentille (5) présente un aspect lisse, notamment la lentille est dépourvu d'arête vive, la lentille pouvant apparaître avec un diamètre apparent sensiblement inférieur à 12 mm.

## Patentansprüche

1. Optische Vorrichtung (1), insbesondere für ein Kraftfahrzeug, wobei diese Vorrichtung eine Vielzahl von Leuchtmodulen (2) aufweist, wobei wenigstens eines dieser Module aufweist:
- eine Lichtquelle (3), die insbesondere eine LED umfasst,
- einen Reflektor (4), der dafür ausgelegt ist, von der Lichtquelle stammendes Licht zu reflektieren,
- eine Linse (5), die im Strahlengang eines von dem Reflektor stammenden Lichtbündels angeordnet ist, wobei diese Linse eine optische Achse aufweist,
- wobei die Lichtquelle in einem Abstand von der optischen Achse (Oxi) der Linse angeordnet ist, so dass die Lichtquelle nicht durch die Linse hindurch sichtbar ist,
wobei in der Vorrichtung (1):
- die Leuchtmodule (2) der Vielzahl von Leuchtmodulen (2), von denen vorzugsweise wenigstens einige identisch sind, dazu eingerichtet sind, zusammen ein vorschriftsmäßiges Lichtbündel zu bilden, insbesondere ein vorschriftsmäßiges Signallichtbündel, und
- die Module entlang einer gekrümmten Linie (C) angeordnet sind, wobei insbesondere diese Linie im Wesentlichen einem gewölbten Rand der Vorrichtung folgt, wobei diese Linie zum Beispiel eine Biegung aufweisen kann.

2. Vorrichtung nach dem vorhergehenden Anspruch, **dadurch gekennzeichnet, dass** sie eine Maske (10) aufweist, die insbesondere aus Kunststoff hergestellt ist, zum Beispiel durch Formung, und die einen oder mehrere Hohlräume umfasst, um wenigstens teilweise eine oder mehrere zusätzliche Lichtquellen aufzunehmen, insbesondere um eine oder mehrere photometrische Beleuchtungsfunktionen auszuführen, wobei diese Quelle oder diese Quellen wenigstens eine Lampe aufweisen können, wie etwa eine Halogenlampe oder Entladungslampe, zum Beispiel eine Xenonlampe, und dadurch, dass wenigstens eines der Leuchtmodule auf einem Träger (14) angeordnet ist, der von der Maske verschieden ist.

3. Vorrichtung nach einem der vorhergehenden Ansprüche, **dadurch gekennzeichnet, dass** einige Lichtquellen der Module auf einem gemeinsamen Träger (14) angeordnet sind, wobei dieser Träger vorzugsweise eben ist.

4. Vorrichtung nach dem vorhergehenden Anspruch, **dadurch gekennzeichnet, dass** alle Leuchtmodule, insbesondere LED-Leuchtmodule, der Vorrichtung auf einem einzigen gemeinsamen Träger angeordnet sind.

5. Vorrichtung nach einem der Ansprüche 1 bis 3, **dadurch gekennzeichnet, dass** die Leuchtmodule, insbesondere LED-Leuchtmodule, der Vorrichtung auf wenigstens zwei getrennten Trägern (14) angeordnet sind.

6. Vorrichtung nach einem der vorhergehenden Ansprüche, **dadurch gekennzeichnet, dass** der Reflektor (4) des Leuchtmoduls in einem ersten, insbesondere horizontalen Schnitt einen im Wesentlichen parabolischen Außenumfang aufweist, insbesondere derart, dass ein Lichtbündel mit einem vorbestimmten Lichtverteilungsraster erzeugt wird.

7. Vorrichtung nach einem der Ansprüche 1 bis 5, **dadurch gekennzeichnet, dass** der Reflektor (4) des Leuchtmoduls in einem ersten, insbesondere horizontalen Schnitt einen im Wesentlichen elliptischen Außenumfang aufweist, insbesondere derart, dass ein Lichtbündel mit einem vorbestimmten Lichtverteilungsraster erzeugt wird.

8. Vorrichtung nach einem der vorhergehenden Ansprüche, **dadurch gekennzeichnet, dass** der Reflektor (4) des Moduls in einem zweiten, insbesondere vertikalen Schnitt einen im Wesentlichen elliptischen Außenumfang aufweist, insbesondere mit einem Brennpunkt der Ellipse, der im Wesentlichen mit einem Brennpunkt der Linse zusammenfällt, so dass das Maximum an Lichtstrom in Richtung der Linse gesendet wird.

9. Vorrichtung nach einem der vorhergehenden Ansprüche, **dadurch gekennzeichnet, dass** die Lichtquelle (3) des Moduls im Wesentlichen an einem Ende des Reflektors angeordnet ist.

10. Vorrichtung nach einem der vorhergehenden Ansprüche, **dadurch gekennzeichnet, dass** der Reflektor (4) eine Höhe aufweist, die größer als diejenige der Linse ist, wobei insbesondere der Reflektor ein Ende aufweist, welches sich unterhalb der Linse befindet, wenn der Reflektor und die Linse in der Vorrichtung angebracht sind.

11. Vorrichtung nach einem der vorhergehenden Ansprüche, **dadurch gekennzeichnet, dass** die Linse (5) ein glattes Aussehen aufweist, wobei insbesondere die Linse keine scharfen Kanten aufweist, wobei die Linse mit einem scheinbaren Durchmesser erscheinen kann, der im Wesentlichen kleiner als 12 mm ist.

## Claims

1. Optical device (1), in particular for a motor vehicle, this device comprising a plurality of light modules (2), at least one of said modules comprising:
- a light source (3), in particular comprising an LED,
- a reflector (4) arranged to reflect light coming from the light source,
- a lens (5) arranged on the path of a light beam coming from the reflector, this lens having an optical axis,
- the light source is arranged at a distance from the optical axis (Oxi) of the lens, so that the light source is not visible through the lens,
in which device (1):
- said light modules (2) of the plurality of light modules (2), at least some of which are preferably identical, are arranged to form together a regulatory beam, in particular a regulatory signalling beam, and
- said modules are arranged along a curved line (C), in particular this line substantially follows a curved edge of the device, this line possibly exhibiting a bend.

2. Device according to the preceding claim, **characterized by** the fact that it comprises a mask (10), in particular made of plastic material, for example by molding, comprising one or more cavities for at least partially housing one or more additional light sources in particular for performing one or more photometric lighting functions, this source or these sources possibly comprising at least one lamp such as a halogen or discharge lamp, for example a xenon lamp, and by the fact that at least one of the light modules is arranged on a support (14) distinct from the mask.

3. Device according to any one of the preceding claims, **characterized by** the fact that certain light sources of the modules are arranged on a common support (14), this support preferably being planar.

4. Device according to the preceding claim, **characterized by** the fact that all of the light modules, in particular LED modules, of the device are arranged on a single common support.

5. Device according to one of Claims 1 to 3, **characterized by** the fact that the light modules, in particular LED modules, of the device are arranged on at least two separate supports (14).

6. Device according to any one of the preceding claims, **characterized by** the fact that the reflector (4) of the light module has, in a first, in particular horizontal, section, a substantially parabolic perimeter, in particular so as to produce a beam with a predetermined photometric chart.

7. Device according to one of Claims 1 to 5, **characterized by** the fact that the reflector (4) of the light module has, in a first, in particular horizontal, section, a substantially elliptical perimeter, in particular so as to produce a beam with a predetermined photometric chart.

8. Device according to any one of the preceding claims, **characterized by** the fact that the reflector (4) of the module has, in a second, in particular vertical, section, a substantially elliptical perimeter, in particular with a focal point of the ellipse substantially coincident with a focal point of the lens, so as to send the maximum luminous flux towards the lens.

9. Device according to any one of the preceding claims, **characterized by** the fact that the light source (3) of the module is arranged substantially at one end of the reflector.

10. Device according to any one of the preceding claims, **characterized by** the fact that the reflector (4) has a height greater than that of the lens, in particular the reflector comprises an end which is located below the lens, when the reflector and the lens are mounted in the device.

11. Device according to any one of the preceding claims, **characterized by** the fact that the lens (5) has a smooth appearance, in particular the lens has no sharp edges, the lens possibly appearing with an apparent diameter of substantially less than 12 mm.
